# FASCICULE DE BREVET EUROPEEN

(11) **EP 3 016 785 B1**
(45) Date de publication et mention de la délivrance du brevet: **17.05.2017**
(21) Numéro de dépôt: 14739891.1
(22) Date de dépôt: 25.06.2014
(51) Int. Cl.: B26D 3/08, G06K 19/077, B26F 3/00

(54) **FABRICATION D'UNE PLAQUE DE GRANDE ÉPAISSEUR COMPRENANT UNE CARTE DÉTACHABLE DE PETITE ÉPAISSEUR**
VERFAHREN UND VORRICHTUNG FÜR DIE HERSTELLUNG EINER KARTE, WELCHE KARTE EINE LÖSBARE KARTE MIT GERINGERE DICKE AUFWEIST
METHOD AND DEVICE FOR MANUFACTURING A CARD WHICH CARD COMPRISES A DETACHABLE CARD OF LESSER THICKNESS

(30) Priorité: 01.07.2013 FR 1356358
(43) Date de publication de la demande: 11.05.2016
(73) Titulaire: Oberthur Technologies, 92700 Colombes (FR)
(72) Inventeur: BOSQUET, Olivier, F-92700 Colombes (FR); HUET, Mickaël, F-92700 Colombes (FR)
(74) Mandataire: Perrot, Emilie
(86) Numéro de dépôt international: PCT/FR2014/051606
(87) Numéro de publication internationale: WO 2015/001226

(56) Documents cités:
- EP-A1- 2 568 418
- DE-A1- 19 513 282

## Description

La présente invention concerne le domaine des cartes, telles les cartes à microcircuit, et de la fabrication desdites cartes.

Les cartes à microcircuit sont utilisées dans des domaines variés, tels que la banque pour réaliser des cartes de retrait ou de crédit, l'authentification des personnes pour réaliser des documents identitaires ou encore la téléphonie cellulaire pour réaliser des cartes d'abonnement téléphonique ou cartes SIM.

Dans ces domaines l'épaisseur des cartes est restée la même depuis l'invention et la normalisation des cartes à microcircuit.

Particulièrement dans le domaine de la téléphonie, les cartes à microcircuit ou cartes SIM ont vu leur format se réduire avec la réduction de la taille des terminaux.

Ainsi les premières cartes présentaient un format 1FF, sensiblement rectangulaire de dimensions 54 x 85,6 mm pour une épaisseur de 0,76+/-0,08 mm. Ce format a ensuite été remplacé par un format 2FF plus petit de dimensions 15 x 25 mm pour une même épaisseur. Un format 3FF, encore réduit, a été récemment créé avec pour dimensions 12 x 15 mm et une épaisseur toujours identique.

Le problème apparait avec un nouveau format 4FF de dimensions réduites à 8,8 x 12,3 mm, pour lequel l'épaisseur est réduite et doit être égale à 0,67+0,03/-0,07 mm.

Il est à noter que la zone commune aux deux intervalles d'épaisseur, soit [0,68, 0,70] présente une largeur de 20 µm trop faible pour envisager de réaliser une plaque répondant, en épaisseur, aux deux formats.

La pratique habituelle est de réaliser une carte détachable dans une plaque de format 1FF de grande épaisseur 0,76+/-0,08 mm. Il est avantageux de pouvoir continuer à utiliser les plaques existantes et surtout les nombreux outillages et moyens de fabrication existants, y compris pour réaliser les nouvelles cartes 4FF.

De plus, les différents formats évoqués ci-dessus sont amenés à coexister, et il convient de réaliser au moins un adaptateur de format depuis le nouveau format 4FF vers les formats plus anciens 3FF, 2FF, 1FF. Un tel adaptateur présente un format extérieur similaire à un des formats anciens. Ici encore la pratique est de disposer un ou plusieurs tels adaptateurs, conjointement avec une carte, dans une même plaque de format 1FF. Un tel adaptateur présente nécessairement une grande épaisseur, au moins sur une partie de sa surface.

La carte de petit format comprend typiquement un module intégrant un microcircuit et une plaque de contact. La plaque de contact est une interface du microcircuit par exemple avec un lecteur, que l'on nomme parfois abusivement puce, car seule partie visible du module. Que la carte de petit format soit utilisée seule, détachée de la plaque, dans un lecteur selon un format petite épaisseur ou solidaire de la plaque dans un lecteur selon un format grande épaisseur, la plaque de contact doit affleurer sur une face de la carte.

Ceci implique encore que d'une part la différence d'épaisseur entre la grande épaisseur et la petite épaisseur, par exemple réalisée sous forme d'un lamage, doit nécessairement être disposée entièrement contre une face de la plaque et que cette face est nécessairement la face opposée à la face où affleure la plaque de contact.

Une telle disposition impose une intervention depuis une face de la plaque pour réaliser un lamage et une intervention depuis la face opposée de la plaque pour mettre en place le module.

Pour différentes raisons qui seront détaillées plus avant, il est malaisé, voire impossible, d'intervenir sur la face de la plaque opposée à la face où affleure la plaque de contact.

Le problème que se propose de résoudre la présente invention est de fabriquer une plaque plastique mince de grande épaisseur comprenant une carte de petit format et de petite épaisseur détachable de la plaque, en n'utilisant que des interventions depuis une unique face de la plaque.

Pour cela l'invention propose un outillage de fabrication d'une plaque plastique mince de grand format et de grande épaisseur comprenant une carte de petit format et de petite épaisseur détachable de la plaque, comprenant un moyen de lamage apte à réaliser, dans une première face de la plaque, un lamage de profondeur égale à la différence entre la grande épaisseur et la petite épaisseur, un poinçon de nivellement apte à réaliser un poinçonnage de nivellement dans la zone lamée, selon une direction de nivellement faisant face à une deuxième face de la plaque, opposée à la première face, selon un enfoncement de nivellement égal à la profondeur du lamage, afin de niveler le fond du lamage avec la première face de la plaque, et un moyen de prédécoupe apte à prédécouper un contour de la carte inscrit dans la zone nivelée, afin de rendre la carte détachable.

Selon une autre caractéristique, le moyen de prédécoupe comprend : un poinçon aller présentant, en plein, une forme sensiblement identique au contour de la carte, apte à poinçonner la plaque, selon une direction aller, une matrice présentant, en creux, une forme sensiblement identique au contour de la carte, alignée avec le poinçon aller, afin de pouvoir accueillir la matière poussée par le poinçon aller, et un poinçon retour présentant, en plein, une forme sensiblement identique au contour de la carte, aligné avec le poinçon aller, apte à poinçonner la plaque selon une direction retour, opposée à la direction aller.

Selon une autre caractéristique, la direction de nivellement est identique à la direction aller, le poinçon aller et le poinçon de nivellement sont confondus, et un enfoncement aller du poinçon aller est sensiblement égal à un enfoncement retour du poinçon retour augmenté de l'enfoncement de nivellement.

Selon une caractéristique alternative, la direction de nivellement est identique à la direction retour, le poinçon retour et le poinçon de nivellement sont confondus, et un enfoncement retour du poinçon retour est sensiblement égal à un enfoncement aller du poinçon aller augmenté de l'enfoncement de nivellement.

Selon une autre caractéristique, le poinçon retour comprend un moyen de rappel, armé lorsque le poinçon retour est soumis à une poussée selon la direction aller, et rappelant le poinçon retour selon la direction retour lorsque la poussée cesse.

Selon une autre caractéristique, le moyen de rappel au repos est tel que le poinçon retour dépasse de la matrice, selon la direction de nivellement, d'une hauteur égale à l'enfoncement de nivellement.

L'invention concerne encore un procédé de fabrication d'une plaque plastique mince de grand format et de grande épaisseur comprenant une carte de petit format et de petite épaisseur détachable de la plaque comprenant les étapes suivantes : réalisation dans une première face de la plaque d'un lamage de profondeur égale à la différence entre la grande épaisseur et la petite épaisseur, poinçonnage de nivellement, dans la zone lamée, selon une direction de nivellement faisant face à une deuxième face de la plaque, opposée à la première face, selon un enfoncement de nivellement égal à la profondeur du lamage, afin de niveler le fond du lamage avec la première face de la plaque, prédécoupe d'un contour de la carte inscrit dans la zone nivelée, afin de rendre la carte détachable.

Selon une autre caractéristique, l'étape de prédécoupe comprend les étapes suivantes : poinçonnage aller de la plaque, au moyen d'un poinçon aller présentant, en plein, une forme sensiblement identique au contour de la carte, selon une direction aller, contre une matrice présentant, en creux, une forme sensiblement identique au contour de la carte, alignée avec le poinçon aller, afin de pouvoir accueillir la matière poussée par le poinçon aller, et poinçonnage retour de la plaque, au moyen d'un poinçon retour présentant, en plein, une forme sensiblement identique au contour de la carte, aligné avec le poinçon aller, selon une direction retour opposée à la direction aller.

Selon une autre caractéristique, la direction de nivellement est identique à la direction aller et les étapes de poinçonnage aller et de poinçonnage de nivellement se confondent en une unique étape de poinçonnage, selon un enfoncement aller sensiblement égal à un enfoncement retour du poinçonnage retour augmenté de l'enfoncement de nivellement.

Selon une autre caractéristique alternative, la direction de nivellement est identique à la direction retour et les étapes de poinçonnage retour et de poinçonnage de nivellement se confondent en une unique étape de poinçonnage, selon un enfoncement retour sensiblement égal à un enfoncement aller du poinçonnage aller augmenté de l'enfoncement de nivellement.

Selon une autre caractéristique, le procédé comprend encore une étape de deuxième prédécoupe d'un deuxième contour circonscrit à la zone nivelée, afin de former un adaptateur détachable.

Selon une autre caractéristique, l'étape de deuxième prédécoupe comprend les étapes suivantes : poinçonnage aller de la plaque, au moyen d'un deuxième poinçon aller présentant, en plein, une forme sensiblement identique au deuxième contour, selon une deuxième direction aller, contre une deuxième matrice présentant, en creux, une forme sensiblement identique au deuxième contour, alignée avec le deuxième poinçon aller, afin de pouvoir accueillir la matière poussée par le deuxième poinçon aller, et poinçonnage retour de la plaque, au moyen d'un deuxième poinçon retour présentant, en plein, une forme sensiblement identique au deuxième contour, aligné avec le deuxième poinçon aller, selon une deuxième direction retour opposée à la deuxième direction aller.

Selon une autre caractéristique, la deuxième direction aller est identique à la direction aller.

Selon une autre caractéristique, la deuxième direction aller est identique à la direction retour.

Selon une autre caractéristique, la carte est au format 4FF et l'adaptateur est au format 3FF.

L'invention concerne encore un produit obtenu par un tel procédé/outillage.

D'autres caractéristiques, détails et avantages de l'invention ressortiront plus clairement de la description détaillée donnée ci-après à titre indicatif en relation avec des dessins sur lesquels :
- les figures 1 et 2 présentent un produit attendu,
- les figures 3-5 illustrent le principe d'un procédé selon l'invention en trois étapes :

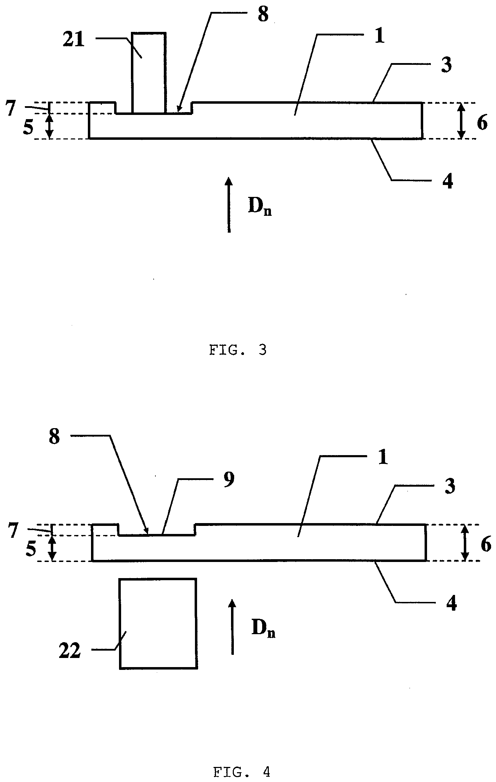

   - figure 3 : lamage,

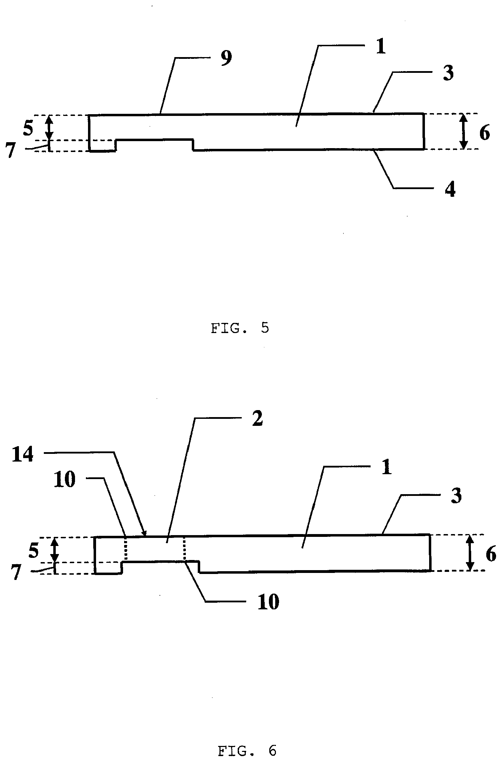

   - figures 4 et 5 : nivellement,
   - figure 6 : prédécoupe,

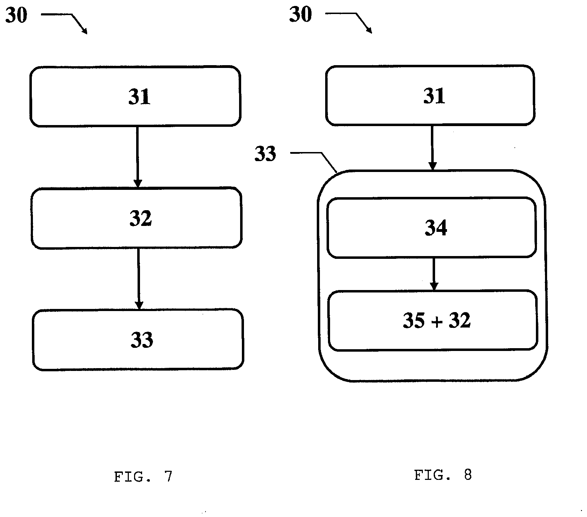

- les figures 7-8 illustrent deux modes de réalisation d'un procédé selon l'invention,

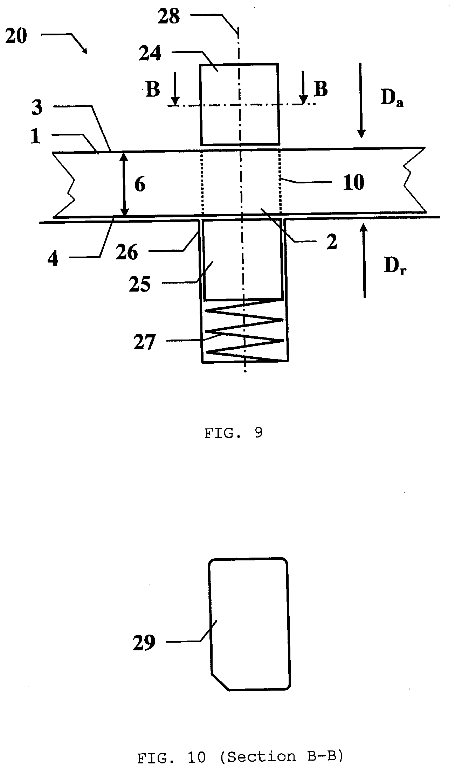

- les figures 9-10 illustrent un mode de réalisation d'un outillage selon l'invention,

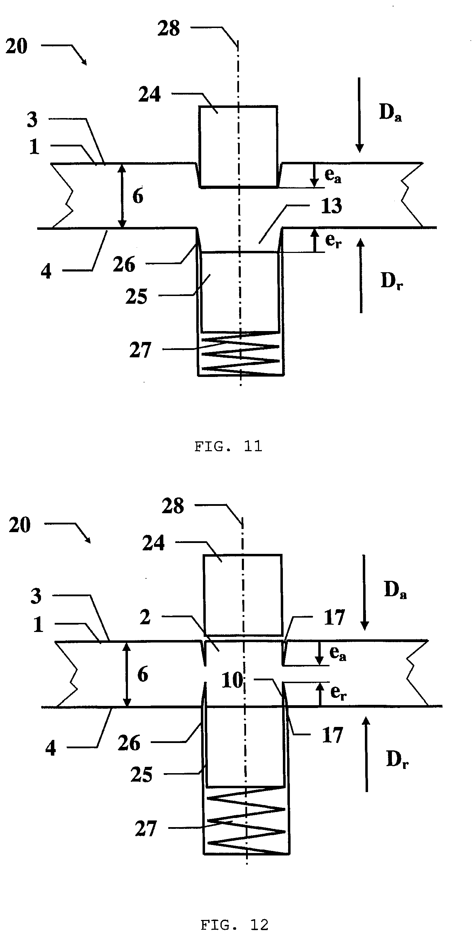

- les figures 11-12 illustrent le principe d'un procédé de réalisation d'une prédécoupe,

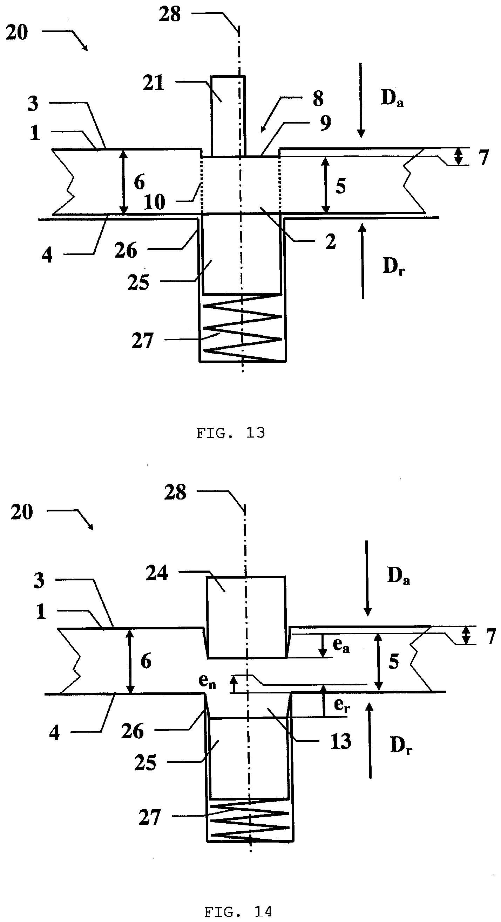

- les figures 13-15 illustrent un procédé combinant prédécoupe et nivellement,

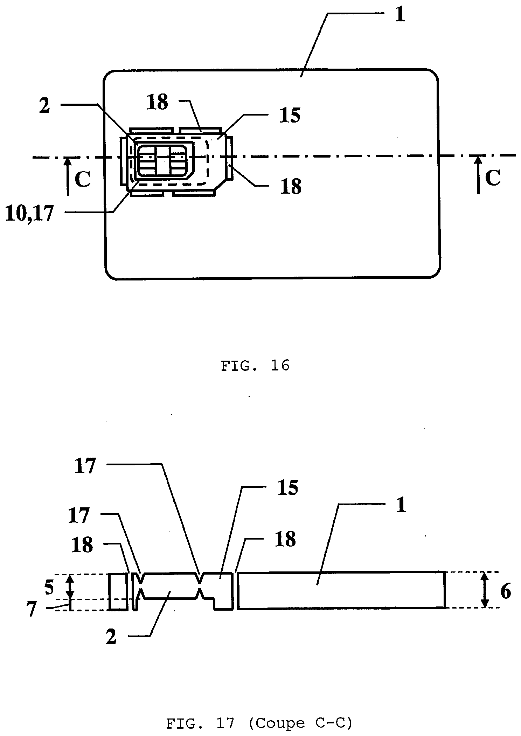

- les figures 16-17 illustrent deux modes de réalisation alternatifs d'une prédécoupe.

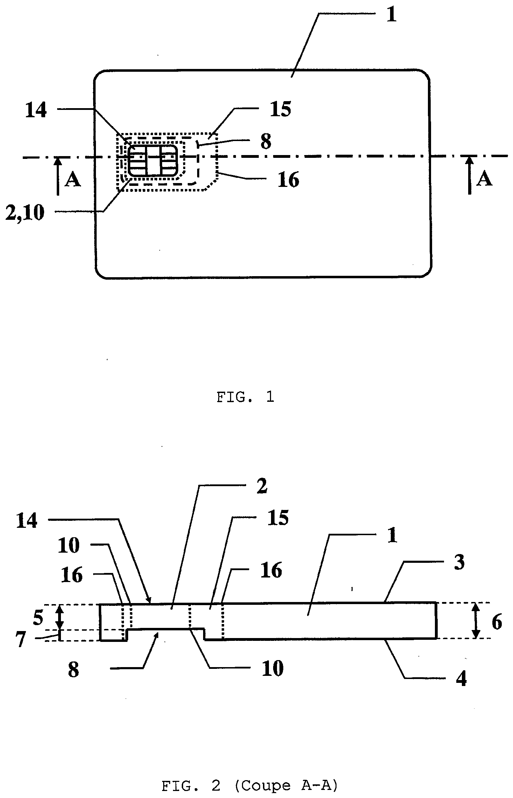

La figure 1 en vue de face et la figure 2 en vue coupée, illustrent un mode de réalisation d'un produit attendu. Il est souhaité de réaliser une plaque plastique mince 1, par exemple une carte selon la norme ISO 7816. Cette plaque 1 est de grand format, par exemple ID-1 selon cette norme. Elle présente une grande épaisseur 6, par exemple comprise entre 680 et 840 µm selon cette norme. La plaque 1 comporte une carte 2 de petit format, par exemple 4FF selon cette norme, et de petite épaisseur 5, par exemple comprise entre 680 et 840 µm selon cette norme.

Il peut être noté que l'exemple précédent est significatif, en ce que l'intervalle d'intersection entre l'intervalle de grande épaisseur 6 et l'intervalle de petite épaisseur 5, compris entre 680 et 700 µm et présentant une largeur de 20 µm, est trop étroit pour permettre la fabrication d'une plaque/carte d'une unique épaisseur commune à la plaque 1 et à la carte 2.

La carte 2 est solidaire de la plaque 1, et peut le cas échéant être utilisée ainsi par exemple dans un lecteur correspondant au grand format. La carte 2 peut encore être détachée de la plaque 1. Pour cela le contour 10 de la carte 2 est fragilisé par une opération de prédécoupe. Une telle fragilisation permet de finir de découper le contour 10, typiquement manuellement, afin de détacher la carte 2 de la plaque 1. La carte 2 peut être utilisée ainsi seule par exemple dans un lecteur correspondant au petit format.

L'épaisseur ne pouvant être la même pour la plaque 1 et pour la carte 2 il convient de réduire l'épaisseur de la plaque 1, au moins dans la zone où est délimité la carte 2. Pour cela, une solution consiste à réaliser un lamage 8.

Dans certains cas d'application la carte 2 est une carte à microcircuit. Une telle carte 2 comprend un module intégrant un microcircuit et une plaque de contact 14. La plaque de contact 14 est une interface du microcircuit par exemple avec un lecteur, que l'on nomme parfois abusivement puce, car seule partie visible du module. Que la carte 2 soit utilisée seule, détachée de la plaque 1, dans un lecteur selon un format petite épaisseur ou solidaire de la plaque 1 dans un lecteur selon un format grande épaisseur, la plaque de contact 14 doit affleurer sur une face de la carte 2.

Ceci implique que la différence d'épaisseur 7 entre la grande épaisseur 6 et la petite épaisseur 5, doit nécessairement être disposée entièrement contre une face 3,4 de la plaque 1. Tel qu'illustré aux figures 1 et 2, selon le mode de réalisation où la différence d'épaisseur 7 est obtenue par un lamage 8 de profondeur égale à cette différence d'épaisseur 7, ledit lamage 8 doit être réalisé sur une face 4, face inférieure sur la figure 2, de la plaque 1. Ceci implique de plus que cette face 4 est nécessairement la face 4 opposée à la face 3, où affleure la plaque de contact 14, face supérieure sur la figure 2.

Une telle disposition impose une intervention depuis une face 4 de la plaque 1 pour réaliser un lamage 8 et une intervention depuis la face 3 opposée pour mettre en place le module et la plaque de contact 14.

Or, il apparait malaisé, voire impossible, d'intervenir sur la face 4 de la plaque 1 opposée à la face 3 où affleure la plaque de contact 14.

En effet, toutes les machines de fabrication des plaques/cartes sont prévues pour travailler sur une seule face. Ainsi le module est mis en place depuis la première face 3. La deuxième face 4, opposée à la première face 3, sert de référence et d'appui. Par la deuxième face 4, la plaque/carte est plaquée contre la table de la machine. Pour cette raison il est préférable d'avoir une surface plane et lisse, afin d'éviter tout risque d'accrochage lors des opérations de transfert.

Il peut être vu, sur la figure 1, que pour un format 4FF, tel que représenté pour le contour 10 de la carte 2, la surface résiduelle de la carte 2 ne comportant pas la plaque de contact 14 est très réduite, et correspond à 17% de la surface de la carte 2. Aussi tout marquage ou inscription, tel qu'un numéro d'identification ou un logo de fabricant ne peut pas être disposé sur la première face 3 de la carte 2. La deuxième face 4 de la carte est par conséquent dédiée à un tel marquage. Ce marquage est préférablement réalisé en même temps que la plaque 1. Une opération de lamage par usinage, si elle est réalisée dans la deuxième face 4, est impossible en ce qu'elle détruirait le marquage.

Aussi il convient de proposer un autre principe, pour obtenir le produit illustré aux figures 1 et 2, sans opération sur la deuxième face 4 opposée à la première face 3, et particulièrement sans opération d'usinage dans ladite deuxième face 4.

Ce principe, proposé par la présente, est illustré en référence aux figures 3 à 6. Le procédé selon l'invention, dont le séquencement est illustré à la figure 7, comprend trois étapes principales.

Selon une première étape 31, illustrée à la figure 3, il est réalisé un lamage 8, dans la première face 3 de la plaque 1. Ce lamage 8 peut être réalisé par un moyen de lamage 21. Ce peut être par usinage, par exemple au moyen d'une fraise. Alternativement, il est aussi possible de réaliser le lamage 8 par estampage / matriçage de la plaque 1 au moyen d'un poinçon 21 complémentaire du lamage 8. Alternativement, il est aussi possible de réaliser le lamage 8 par moulage de la plaque 1, au moyen d'un moule comprenant une forme complémentaire du lamage 8.

Dans tous les cas, le lamage 8 est tel qu'il présente une profondeur 7 égale à la différence entre la grande épaisseur 6 de la plaque 1 et la petite épaisseur 5 souhaitée pour la carte 2.

Dans le cas d'une carte à microcircuit, le module est disposé dans la première face 3 où est réalisé le lamage 8. Le module est placé dans le lamage 8 de telle manière que la plaque de contact 14 affleure au fond 9 du lamage 8. Avantageusement, le lamage 8 peut être réalisé par un usinage conjoint à l'usinage du logement destiné à accueillir le module.

Ici, au moins deux modes de réalisation peuvent être retenus. Soit le module est mis en place dans le lamage 8 lors ou après la réalisation dudit lamage 8. Soit le module est mis en place après l'étape de nivellement qui va être décrite.

Selon une deuxième étape 32, illustrée aux figures 4 et 5, il est ensuite réalisé un nivellement 32, la figure 4 présente l'état avant l'opération de nivellement et la figure 5 présente l'état après. Ce nivellement 32 vise à déplacer la matière de la plaque 1 au droit du lamage 8, selon une direction de nivellement Dₙ faisant face à la deuxième face 4 de la plaque 1, autrement dit la direction de nivellement Dₙ va de la deuxième face 4 en direction de la première face 3 de la plaque 1. Ce déplacement de matière est tel que le fond 9 du lamage 8 vienne de niveau avec la première face 3.

Ceci peut par exemple être réalisé par un poinçon de nivellement 22 qui réalise un poinçonnage de nivellement 32, au droit de la zone comprenant le lamage 8, ou zone lamée. Ledit poinçonnage de nivellement 22 vient ici poinçonner la deuxième face 4 et la repousser en direction de la première face 3 selon un enfoncement de nivellement en égal à la profondeur 7 du lamage 8. Ainsi, après nivellement 32, la surface du fond 9 du lamage 8 est confondue avec ou affleure à la première face 3. Le résultat de l'étape de nivellement 32 est illustré à la figure 5.

Selon une troisième étape 33, dont le résultat est illustré à la figure 6, il est ensuite procédé à une prédécoupe 33 de la plaque 1 dans la zone précédemment nivelée. Cette prédécoupe 33 peut être réalisée au moyen d'un moyen de prédécoupe et la prédécoupe forme un contour 10 de la carte 2 inscrit dans la zone nivelée. Cette prédécoupe 33 forme la carte 2 et la rend détachable de la plaque 1.

L'étape de prédécoupe 33 a été décrite ici postérieure à l'étape de nivellement 32. Alternativement la prédécoupe 33 peut être réalisée avant le nivellement 32 et même, comme il va être décrit plus avant, concomitamment.

Il faut comprendre de ce qui a été décrit précédemment que le contour 10 de la carte 2 est inscrit dans la zone nivelée et que la zone nivelée est elle-même inscrite dans la zone lamée.

Plusieurs techniques sont possibles pour réaliser la prédécoupe du contour 10 de la carte 2 dans la plaque 1.

Une technique avantageuse, qui fait l'objet d'une demande de brevet parallèle de la demanderesse, est une technique utilisant un outillage 20 illustré aux figures 9 et 10 et selon un procédé comprenant deux étapes de poinçonnage aller 34 et retour 35 dont le principe est illustré aux figures 11 et 12.

Ledit outillage 20 va maintenant être décrit en référence à la figure 9 qui présente un mode de réalisation en vue de face, complété par la figure 10 qui présente une vue sectionnée B-B.

L'outillage 20 comprend une table sensiblement horizontale, apte à accueillir une plaque 1 et dans laquelle est découpée une matrice 26.

L'outillage 20 comprend un poinçon aller 24. Ce poinçon aller 24 présente, comme visible à la figure 10, en plein, une forme 29 sensiblement identique à la forme de la prédécoupe que l'on souhaite réaliser et donc sensiblement identique au contour 10 de la carte 2. Le contour 10 est figuré en pointillé car il n'existe pas encore dans la plaque 1 avant l'étape de prédécoupe 33.

Le poinçon aller 24 est apte à poinçonner la plaque 1, selon une direction aller Dₐ, par exemple ici verticale descendante, telle que représentée sur la figure. Le poinçonnage aller 34 ainsi réalisé presse la plaque 1 contre une matrice 26 présentant, en creux, une forme 29 sensiblement identique à la forme du poinçon aller 24 et donc sensiblement identique au contour 10 de la carte 2. La matrice 26 est alignée avec le poinçon aller 24, selon l'axe 28 de poinçonnage et est ainsi apte à accueillir la matière poussée 13 par le poinçon aller 24 lors du poinçonnage aller 34.

L'outillage 20 comprend encore un poinçon retour 25 présentant, en plein, une forme 29 sensiblement identique au contour 10 de la carte 2. Le poinçon retour 25 est aligné avec le poinçon aller 24, selon l'axe 28 de poinçonnage. Le poinçon retour 25 est apte à poinçonner la plaque 1 selon une direction retour Dᵣ, opposée à la direction aller Dₐ. Ainsi, si le poinçon aller 24 poinçonne la plaque 1 par sa première face 3, le poinçon retour 25 poinçonne la plaque 1 par sa deuxième face 4, opposée à la première face 3.

En référence aux figures 11 et 12 va maintenant être décrite l'utilisation de cet outillage 20 pour réaliser une prédécoupe selon le contour 10 de la carte 2.

Après que la plaque 1 ait été mise en place dans l'outillage 20, le poinçonnage aller 34 est réalisé en manoeuvrant le poinçon aller 24 selon la direction aller Dₐ. Ceci produit le résultat de la figure 11, où la plaque 1 est poinçonnée par la face 3 par laquelle arrive le poinçon aller 24. Ce faisant, le poinçon aller 24 pousse la matière 13 qui vient pénétrer dans la matrice 26. Le poinçonnage aller 34 est réalisé avec un enfoncement aller eₐ.

Dans une seconde étape, le poinçonnage retour 35 est réalisé en manoeuvrant le poinçon retour 35 selon la direction retour Dᵣ opposée à la direction aller Dₐ. Ceci produit le résultat de la figure 12, où la plaque 1 est poinçonnée par l'autre face 4, opposée à la première face 3, par laquelle arrive le poinçon retour 25. Ce faisant, le poinçon retour 25 repousse la matière, précédemment poussée 13 dans la matrice 26, afin de sensiblement la replacer dans l'épaisseur 6 de la plaque 1. Le poinçonnage retour 35 est réalisé avec un enfoncement retour eᵣ.

La succession du poinçonnage aller 34 et du poinçonnage retour 35 remet sensiblement la matière en place. Cependant au passage, il a été créé sur la face 3, respectivement 4, de la plaque 1, une entaille 17 de profondeur sensiblement égale à l'enfoncement aller eₐ, respectivement à l'enfoncement retour eᵣ. Les deux poinçons aller 24 et retour 25, ainsi que la matrice 26, présentant avantageusement une forme 29 identique à la forme souhaitée pour le contour 10 de la carte 2, les entailles 17 sont disposées le long dudit contour 10. Ces entailles constituent une fragilisation qui réalise ainsi une prédécoupe de la carte 2 le long du profil 10.

Il peut être remarqué que les enfoncements respectifs aller eₐ et retour eᵣ sont dans des ordres de grandeur similaires. Cependant une différence peut être acceptée sans remettre en cause le principe de fragilisation par formation des entailles 17.

Aussi selon une caractéristique avantageuse de l'invention, l'étape de nivellement 32 peut avantageusement être combinée avec l'étape de prédécoupe 33 en réalisant le poinçonnage de nivellement 32 soit lors du poinçonnage aller 34, soit lors du poinçonnage retour 35. Le séquencement du procédé 30 ainsi modifié est illustré à la figure 8. L'étape de prédécoupe 33 se décompose en poinçonnage aller 34 et poinçonnage retour 35. L'un quelconque de ces deux poinçonnages 34,35 réalise de plus l'étape de nivellement 32.

Ainsi selon un premier mode de réalisation, le nivellement 32 est réalisé lors du poinçonnage aller 34 de l'étape de prédécoupe 33. Dans ce mode de réalisation, la direction de nivellement Dₙ est identique à la direction aller Dₐ. Le poinçon aller 24 et le poinçon de nivellement 22 sont confondus en un seul poinçon, réalisant un poinçonnage aller 34 se confondant avec le poinçonnage de nivellement 32. Dans ce mode de réalisation, non représenté sur les figures, le poinçonnage aller 34 est réalisé depuis la face 4 opposée au lamage 8. Dans ce mode de réalisation, l'enfoncement aller eₐ du poinçon aller 24/de nivellement 22 est sensiblement égal à un enfoncement retour eᵣ du poinçon retour 25 augmenté de l'enfoncement de nivellement en. L'enfoncement en de nivellement étant égal à la différence 7 entre la grande épaisseur 6 et la petite épaisseur 5, le poinçonnage aller 34 de l'étape de prédécoupe 33 est « prolongé ». Ainsi après poinçonnage retour, il est réalisé un nivellement du fond 9 du lamage 8 avec la première face 3.

Selon un deuxième mode de réalisation alternatif, le nivellement 32 est réalisé lors du poinçonnage retour 35 de l'étape de prédécoupe 33. Dans ce mode de réalisation, la direction de nivellement Dₙ est identique à la direction retour Dᵣ. Le poinçon retour 25 et le poinçon de nivellement 22 sont confondus en un seul poinçon, réalisant un poinçonnage retour 35 se confondant avec le poinçonnage de nivellement 32. Dans ce mode de réalisation, représenté aux figures 13-15, le poinçonnage retour 35 est réalisé depuis la face 4 opposée au lamage 8. Dans ce mode de réalisation, l'enfoncement retour eᵣ du poinçon retour 25 et de nivellement 22 est sensiblement égal à un enfoncement aller eₐ du poinçon aller 24 augmenté de l'enfoncement de nivellement en. L'enfoncement en de nivellement étant égal à la différence 7 entre la grande épaisseur 6 et la petite épaisseur 5, le poinçonnage retour 35 de l'étape de prédécoupe 33 est « prolongé » pour réaliser le nivellement du fond 9 du lamage 8 avec la première face 3.

Les deux modes de réalisation diffèrent de par l'orientation de la plaque 1 relativement aux poinçons 24,25. Le principe commun consiste à profiter du double poinçonnage aller et retour, de directions opposées, pour « prolonger » celui des deux poinçonnages, aller ou retour, qui poinçonne selon une direction opposée au lamage 8, pour réaliser le poinçonnage de nivellement 32.

Ainsi tel qu'illustré aux figures 13-15, le procédé complet, selon le deuxième mode de réalisation, où le nivellement 32 est réalisé au cours du poinçonnage retour 35, est le suivant.

Le procédé débute à la figure 13. La plaque 1 a été mise en place dans l'outillage 20. La première étape 31 consiste à réaliser le lamage 8, au moyen d'un moyen de lamage 21, tel une fraise. Ledit lamage 8 est tel que sa profondeur 7 soit égale à la différence entre la grande épaisseur 6 de la plaque 1 et la petite épaisseur 5 souhaitée pour la carte 2.

Il est ensuite procédé au poinçonnage aller 34, tel qu'illustré à la figure 14. Le poinçon aller 24 est manoeuvré selon la direction aller Dₐ et vient poinçonner la plaque 1 par sa première face 3, contre la matrice 26 disposée en regard et contre la face opposée 4 de la plaque 1. Ceci déplace la matière de la plaque 1, et une partie 13 est poussée dans la matrice 26. Le poinçonnage aller 34 est réalisé selon un enfoncement aller eₐ, mesuré en référence au fond 9 du lamage 8.

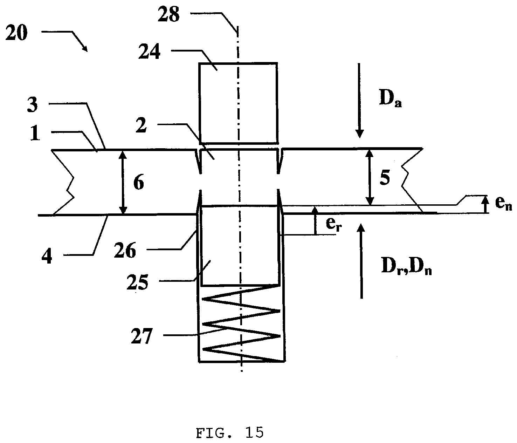

Il est ensuite procédé au poinçonnage retour 35, tel qu'illustré à la figure 15. Le poinçon retour 25 est manoeuvré selon la direction retour Dᵣ et vient poinçonner la plaque 1 par sa deuxième face 4. Ceci replace sensiblement la matière de la plaque 1 en place dans l'épaisseur 6 de la plaque 1. Le double poinçonnage aller 34, puis retour 35, a permis au passage de réaliser la fragilisation selon le contour 10, qui prédécoupe la carte 2. Le poinçonnage retour 35 est réalisé selon un enfoncement retour eᵣ. Le poinçonnage retour 35 est avantageusement mis à profit pour réaliser concomitamment l'étape de nivellement 32. Pour cela l'enfoncement retour eᵣ est pris égal, en valeur absolue, à l'enfoncement aller eₐ auquel est ajouté l'enfoncement de nivellement eₙ nécessaire à replacer le fond 9 du lamage 8 dans le plan de la première face 3.

Selon un mode de réalisation avantageux de l'outillage 20, et tel qu'illustré aux figures 9, 11-15, le poinçon retour 25 comprend un moyen de rappel 27. Ce moyen de rappel 27 est disposé de manière à être armé lorsque le poinçon retour 25 est soumis à une poussée selon la direction aller Dₐ, et à rappeler le poinçon retour 25 selon la direction retour Dᵣ lorsque la poussée cesse. Ainsi comme illustré aux figures 11 ou 14, lors du poinçonnage aller 34, le poinçon aller 24 déplace la matière poussée 13 dans la matrice 26. Ladite matière poussée 13 exerce alors une poussée sur le poinçon retour 25 selon la direction aller Dₐ. Sous l'effet de cette poussée le poinçon retour 35 se déplace à l'encontre du moyen de rappel 27 et arme ce dernier. Lorsque la poussée s'interrompt, par exemple lorsque le poinçon aller 24 se retire, le moyen de rappel 27 se libère et rappelle le poinçon retour 25 selon la direction retour Dᵣ. Ce rappel permet de réaliser le poinçonnage retour 35. Ainsi, avantageusement, seul le poinçon aller 24 a besoin d'être activement commandé. Le poinçon retour 25 réagit au poinçonnage aller 34 et l'étape de poinçonnage retour 35, ainsi que l'étape concomitante de poinçonnage de nivellement 32, s'effectuent passivement, en réponse à l'étape de poinçonnage aller 34. Ceci est avantageux en ce qu'ainsi aucune opération n'est activement réalisée depuis la deuxième face 4 de la plaque 1.

Dans la configuration illustrée, qui correspond au deuxième mode de réalisation, il a été vu que le poinçonnage retour 35 réalise aussi poinçonnage de nivellement 32. De ce fait l'enfoncement retour eᵣ est plus grand que l'enfoncement aller eₐ. Aussi l'enfoncement aller eₐ seul serait insuffisant à armer le moyen de rappel 27 pour produire l'enfoncement retour eᵣ égal à l'enfoncement aller eₐ augmenté de l'enfoncement de nivellement eₙ.

Afin de remédier à ce problème, selon une caractéristique avantageuse, il est réalisé une précontrainte du moyen de rappel 27. Pour cela, le moyen de rappel 27 au repos est tel que le poinçon retour 25 dépasse de la matrice 26, et donc du plan de pose de la carte 1, selon la direction de nivellement Dₙ, d'une hauteur égale à l'enfoncement de nivellement eₙ.

La configuration initiale du poinçon retour 25 est ainsi identique à celle en fin de procédé, représentée à la figure 15. Le poinçon retour 25, en appui contre le moyen de rappel 27 au repos, dépasse dans la direction de nivellement Dₙ, ici confondue avec la direction retour Dᵣ, d'une hauteur égale à l'enfoncement de nivellement eₙ, encore égale à la différence 7 entre la grande épaisseur 6 et la petite épaisseur 5. Il en résulte que lors de la pose d'une plaque 1, puis du poinçonnage aller 34, le poinçon retour 25 et le moyen de rappel 27 est d'abord armé d'une profondeur égale au dépassement du poinçon retour 25, égal à l'enfoncement de nivellement en, lorsque la plaque 1 vient en contact avec la table. Ensuite lorsque le poinçon aller 24 poinçonne effectivement dans la matière de la plaque 1, ladite matière descend de l'enfoncement aller eₐ et entraîne le poinçon retour 25 et le moyen de rappel 27, de cette même hauteur avec elle. Au total, le poinçon retour 25 et le moyen de rappel 27 sont armés par un déplacement égal à l'enfoncement de nivellement en augmenté de l'enfoncement aller eₐ. La libération du moyen de rappel 27 permet alors au poinçon retour 25 de réaliser le poinçonnage retour 35 selon un enfoncement retour eᵣ égal à la somme de l'enfoncement de nivellement en et de l'enfoncement aller eₐ.

D'autres techniques de prédécoupe sont encore possibles. Deux d'entre elles sont illustrées en référence à la figure 16, présentant une plaque 1 en vue de face, et à la figure 17 présentant cette même plaque 1 en vue coupée. La plaque 1 de grande épaisseur 6 comprend un adaptateur de format 15 disposé autour d'une carte 2 de petit format et de petite épaisseur 5.

L'adaptateur 15 est détachable de la plaque 1 au moyen d'une prédécoupe réalisée selon une première technique. Selon cette technique la prédécoupe est réalisée en découpant le contour de l'adaptateur 15 au moyen de lumières 18. Ces lumières 18 découpent la plaque 1 sur toute son épaisseur, mais ne découpent le profil que sur une partie de sa longueur. L'adaptateur 15 peut être détaché de la plaque 1 en rompant les ponts restants entre les lumières 18.

La carte 2 est détachable de l'adaptateur 15 au moyen d'une prédécoupe réalisée selon une deuxième technique. Selon cette technique la prédécoupe est réalisée en découpant le contour 10 de la carte 2 au moyen d'une entaille 17 partant d'une des faces ou de deux entailles 17 en regard partant respectivement de chacune des faces de la plaque 1. Ces entailles 17 découpent la plaque 1 sur une partie seulement de son épaisseur. Elles peuvent, avantageusement, découper le profil 10 sur toute sa longueur. La carte 2 peut être détachée de l'adaptateur 15 en rompant l'épaisseur résiduelle non entaillée au droit de la ou des entailles 17.

Selon l'invention, ces deux techniques de prédécoupe sont applicables alternativement ou complémentairement, pour réaliser l'étape de prédécoupe 33 d'un procédé comprenant une étape de lamage 31 et une étape de nivellement 32.

Selon un mode de réalisation, le procédé peut encore comprendre une étape supplémentaire de deuxième prédécoupe, réalisant une deuxième prédécoupe selon un deuxième contour. Ce deuxième contour est avantageusement réalisé dans la grande épaisseur et est ainsi circonscrit à la zone nivelée. Ceci permet, par exemple, de former un adaptateur détachable. Ainsi une carte de petit format 2 est présente dans la plaque 1 qui comprend de plus un adaptateur vers un format plus grand. Une rupture du contour 10 permet de libérer la carte 2 qui peut alors être utilisée seule. Une rupture du deuxième contour permet de libérer l'adaptateur et ainsi d'utiliser la carte 2 selon un format plus grand correspondant au deuxième contour.

La prédécoupe du deuxième contour peut être réalisé par tout moyen de prédécoupe.

Dans un tel cas de réalisation de contour multiples imbriqués, l'ordre de réalisation de ces contours est avantageusement centrifuge, du plus petit vers le plus grand.

Selon un mode de réalisation préférentiel la prédécoupe du deuxième contour est réalisée en utilisant le même procédé que pour l'étape de prédécoupe du contour 10.

Ainsi la deuxième prédécoupe, peut être réalisée par la séquence d'étapes suivantes. Une première étape réalise un poinçonnage aller de la plaque, au moyen d'un deuxième poinçon aller présentant, en plein, une forme sensiblement identique au deuxième contour, selon une deuxième direction aller, contre une matrice présentant, en creux, une forme sensiblement identique au deuxième contour, alignée avec le deuxième poinçon aller, afin de pouvoir accueillir la matière poussée par le deuxième poinçon aller. Ensuite, une deuxième étape réalise un poinçonnage retour de la plaque, au moyen d'un deuxième poinçon retour présentant, en plein, une forme sensiblement identique au deuxième contour, aligné avec le deuxième poinçon aller, selon une deuxième direction retour opposée à la deuxième direction aller. Dans le cas présent, il n'y a plus de différence d'épaisseur et les étapes de lamage et de nivellement n'ont pas lieu d'être. Aussi l'enfoncement aller du deuxième poinçonnage aller est-il sensiblement égal à l'enfoncement retour du deuxième poinçonnage retour.

Il est possible de réaliser les deuxième poinçonnages aller et retour selon les mêmes directions que celles du poinçonnage aller 34 et retour 35. Ceci est avantageux en ce qu'il n'est pas besoin de retourner l'outillage ou la carte 1 entre les poinçonnages du contour 10 et les deuxième poinçonnages du deuxième contour. Dans ce cas la deuxième direction aller est identique à la direction aller Dₐ, et la deuxième direction retour est identique à la direction retour Dᵣ.

Alternativement, il est possible d'alterner. Dans ce cas la deuxième direction aller est identique à la direction retour Dᵣ, et la deuxième direction retour est identique à la direction aller Dₐ.

Le procédé ainsi décrit permet de réaliser deux contours imbriqués, le premier contour 10 délimitant une carte 2 de petit format et de petite épaisseur et le deuxième contour délimitant un adaptateur de format plus grand et de grande épaisseur, au moins à sa périphérie.

Une application particulièrement avantageuse est une réalisation où la carte 2 est au format 4FF et présente une petite épaisseur correspondant à ce format, et où l'adaptateur est au format 3FF et présente une grande épaisseur au moins sur une partie de sa surface et à tout le moins à sa périphérie.

Il est encore possible d'imbriquer d'autres contours plus grands autour du deuxième contour. Il est ainsi possible de réaliser un tout-en-un comprenant une carte au format 4FF de petite épaisseur, comprenant autour un adaptateur 3FF, puis autour un adaptateur 2FF, le tout étant disposé dans une plaque au format 1FF.

## Revendications

1. Outillage (20) de fabrication d'une plaque plastique mince (1) de grand format et de grande épaisseur (6) comprenant une carte (2) de petit format et de petite épaisseur (5) détachable de la plaque (1), comprenant :
- un moyen de lamage (21) apte à réaliser (31), dans une première face (3) de la plaque (1), un lamage (8) de profondeur (7) égale à la différence entre la grande épaisseur (6) et la petite épaisseur (5),
- un poinçon de nivellement (22) apte à réaliser un poinçonnage de nivellement (32) dans la zone lamée, selon une direction de nivellement (Dₙ) faisant face à une deuxième face (4) de la plaque (1), opposée à la première face (3), selon un enfoncement de nivellement (eₙ) égal à la profondeur (7) du lamage (8), afin de niveler le fond (9) du lamage (8) avec la première face (3) de la plaque (1), et
- un moyen de prédécoupe apte à prédécouper un contour (10) de la carte (2) inscrit dans la zone nivelée, afin de rendre la carte (2) détachable.

2. Outillage (20) selon la revendication 1, où le moyen de prédécoupe comprend :
- un poinçon aller (24) présentant, en plein, une forme (29) sensiblement identique au contour (10) de la carte (2), apte à poinçonner la plaque (1), selon une direction aller (Dₐ),
- une matrice (26) présentant, en creux, une forme (29) sensiblement identique au contour (10) de la carte (2), alignée avec le poinçon aller (24), afin de pouvoir accueillir la matière poussée (13) par le poinçon aller (24), et
- un poinçon retour (25) présentant, en plein, une forme (29) sensiblement identique au contour (10) de la carte (2), aligné avec le poinçon aller (24), apte à poinçonner la plaque (1) selon une direction retour (Dᵣ), opposée à la direction aller (Dₐ).

3. Outillage (20) selon la revendication **2,** où la direction de nivellement (Dₙ) est identique à la direction aller (Dₐ), où le poinçon aller (24) et le poinçon de nivellement (22) sont confondus, et où un enfoncement aller (eₐ) du poinçon aller (24) est sensiblement égal à un enfoncement retour (eᵣ) du poinçon retour (25) augmenté de l'enfoncement de nivellement (eₙ).

4. Outillage (20) selon la revendication **2,** où la direction de nivellement (Dₙ) est identique à la direction retour (Dᵣ), où le poinçon retour (25) et le poinçon de nivellement (22) sont confondus, et où un enfoncement retour (eᵣ) du poinçon retour (25) est sensiblement égal à un enfoncement aller (eₐ) du poinçon aller (24) augmenté de l'enfoncement de nivellement (eₙ).

5. Outillage (20) selon l'une quelconque des revendications **1** à **4,** où le poinçon retour (25) comprend un moyen de rappel (27), armé lorsque le poinçon retour (25) est soumis à une poussée selon la direction aller (Dₐ), et rappelant le poinçon retour (25) selon la direction retour (Dᵣ) lorsque la poussée cesse.

6. Outillage (20) selon la revendication **5,** où le moyen de rappel (27) au repos est tel que le poinçon retour (25) dépasse de la matrice (26), selon la direction de nivellement (Dₙ), d'une hauteur égale à l'enfoncement de nivellement (eₙ).

7. Procédé (30) de fabrication d'une plaque plastique mince (1) de grand format et de grande épaisseur (6) comprenant une carte (2) de petit format et de petite épaisseur (5) détachable de la plaque (1), comprenant les étapes suivantes :
- réalisation (31) dans une première face (3) de la plaque (1) d'un lamage (8) de profondeur (7) égale à la différence entre la grande épaisseur (6) et la petite épaisseur (5),
- poinçonnage de nivellement (32), dans la zone lamée, selon une direction de nivellement (Dₙ) faisant face à une deuxième face (4) de la plaque (1), opposée à la première face (3), selon un enfoncement de nivellement (eₙ) égal à la profondeur (7) du lamage (8), afin de niveler le fond (9) du lamage (4) avec la première face (3) de la plaque (1),
- prédécoupe (33) d'un contour (10) de la carte (2) inscrit dans la zone nivelée, afin de rendre la carte (2) détachable.

8. Procédé selon la revendication **7,** où l'étape de prédécoupe (33) comprend les étapes suivantes :
- poinçonnage aller (34) de la plaque (1), au moyen d'un poinçon aller (24) présentant, en plein, une forme (29) sensiblement identique au contour (10) de la carte (2), selon une direction aller (Dₐ), contre une matrice (26) présentant, en creux, une forme (29) sensiblement identique au contour (10) de la carte (2), alignée avec le poinçon aller (24), afin de pouvoir accueillir la matière poussée (13) par le poinçon aller (24), et
- poinçonnage retour (35) de la plaque (1), au moyen d'un poinçon retour (25) présentant, en plein, une forme (29) sensiblement identique au contour (10) de la carte (2), aligné avec le poinçon aller (24), selon une direction retour (Dᵣ) opposée à la direction aller (Dₐ).

9. Procédé selon la revendication **8,** où la direction de nivellement (Dₙ) est identique à la direction aller (Dₐ) et où les étapes de poinçonnage aller (34) et de poinçonnage de nivellement (32) se confondent en une unique étape de poinçonnage, selon un enfoncement aller (eₐ) sensiblement égal à un enfoncement retour (eᵣ) du poinçonnage retour (35) augmenté de l'enfoncement de nivellement (eₙ).

10. Procédé selon la revendication **8,** où la direction de nivellement (Dₙ) est identique à la direction retour (Dᵣ) et où les étapes de poinçonnage retour (35) et de poinçonnage de nivellement (32) se confondent en une unique étape de poinçonnage, selon un enfoncement retour (eᵣ) sensiblement égal à un enfoncement aller (eₐ) du poinçonnage aller (34) augmenté de l'enfoncement de nivellement (eₙ).

11. Procédé selon l'une quelconque des revendications **7** à **10,** comprenant encore une étape de :
- deuxième prédécoupe d'un deuxième contour circonscrit à la zone nivelée, afin de former un adaptateur détachable.

12. Procédé selon la revendication **11,** où l'étape de deuxième prédécoupe comprend les étapes suivantes :
- poinçonnage aller de la plaque (1), au moyen d'un deuxième poinçon aller présentant, en plein, une forme sensiblement identique au deuxième contour, selon une deuxième direction aller, contre une deuxième matrice présentant, en creux, une forme sensiblement identique au deuxième contour, alignée avec le deuxième poinçon aller, afin de pouvoir accueillir la matière poussée par le deuxième poinçon aller, et
- poinçonnage retour de la plaque (1), au moyen d'un deuxième poinçon retour présentant, en plein, une forme sensiblement identique au deuxième contour, aligné avec le deuxième poinçon aller, selon une deuxième direction retour opposée à la deuxième direction aller.

13. Procédé selon la revendication **12,** où la deuxième direction aller est identique à la direction aller (Dₐ).

14. Procédé selon la revendication **12,** où la deuxième direction aller est identique à la direction retour (Dᵣ).

15. Procédé selon l'une quelconque des revendications **11** à **14,** où la carte (2) est au format 4FF et où l'adaptateur est au format 3FF.

## Patentansprüche

1. Werkzeug (20) zur Herstellung einer schlanken Plastikkarte (1) von großem Format und von großer Dicke (6), welche eine von der Karte (1) ablösbare Karte (2) von kleinem Format und von geringer Dicke (5) umfasst, umfassend:
- ein Senkmittel (21), das geeignet ist, in einer ersten Seite (3) der Karte (1) eine Senkung (8) mit einer Tiefe (7), die gleich der Differenz zwischen der großen Dicke (6) und der geringen Dicke (5) ist, auszubilden (31),
- einen Nivellierstempel (22), der geeignet ist, ein Nivellierstempeln (32) in dem gesenkten Bereich in einer Nivellierrichtung (Dₙ) gegenüber einer der ersten Seite (3) gegenüberliegenden zweiten Seite (4) der Karte (1), entsprechend einer Nivelliereindringung (eₙ), welche gleich der Tiefe (7) der Senkung (8) ist, durchzuführen, um den Boden (9) der Senkung (8) mit der ersten Seite (3) der Karte (1) zu nivellieren, und
- ein Vorschneidemittel, das geeignet ist, eine in den nivellierten Bereich einbeschriebene Kontur (10) der Karte (2) vorzuschneiden, um die Karte (2) ablösbar zu machen.

2. Werkzeug (20) nach Anspruch 1, bei dem das Vorschneidemittel umfasst:
- einen Hin-Stempel (24), der im Vollen eine mit der Kontur (10) der Karte (2) im Wesentlichen identische Form (29) aufweist, der geeignet ist, die Karte (1) in einer Hin-Richtung (Dₐ) zu stempeln,
- eine Matrize (26), die vertieft eine mit der Kontur (10) der Karte (2) im Wesentlichen identische Form (29) aufweist, die mit dem Hin-Stempel (24) fluchtet, um das durch den Hin-Stempel (24) getriebene Material (13) aufnehmen zu können, und
- einen Rück-Stempel (25), der im Vollen eine mit der Kontur (10) der Karte (2) im Wesentlichen identische Form (29) aufweist, der mit dem Hin-Stempel (24) fluchtet, der geeignet ist, die Karte (1) in einer Rück-Richtung (Dᵣ), welche zu der Hin-Richtung (Dₐ) entgegengesetzt ist, zu stempeln.

3. Werkzeug (20) nach Anspruch 2, bei dem die Nivellierrichtung (Dₙ) mit der Hin-Richtung (Dₐ) identisch ist, bei dem der Hin-Stempel (24) und der Nivellierstempel (22) verschmolzen sind, und bei dem eine Hin-Eindringung (eₐ) des Hin-Stempels (24) im Wesentlichen gleich einer Rück-Eindringung (er) des Rück-Stempels (25) erhöht um die Nivelliereindringung (eₙ) ist.

4. Werkzeug (20) nach Anspruch 2, bei dem die Nivellierrichtung (Dₙ) mit der Rück-Richtung (Dᵣ) identisch ist, bei dem der Rück-Stempel (25) und der Nivellierstempel (22) verschmolzen sind, und bei dem eine Rück-Eindringung (er) des Rück-Stempels (25) im Wesentlichen gleich einer Hin-Eindringung (eₐ) des Hin-Stempels (24) erhöht um die Nivelliereindringung (eₙ) ist.

5. Werkzeug (20) nach einem der Ansprüche 1 bis 4, bei dem der Rück-Stempel (25) ein Rückstellmittel (27) umfasst, das gespannt ist, wenn der Rück-Stempel (25) einem Schub in der Hin-Richtung (Dₐ) ausgesetzt ist, und das den Rück-Stempel (25) in der Rück-Richtung (Dᵣ) rückstellt, wenn der Schub aufhört.

6. Werkzeug (20) nach Anspruch 5, bei dem das Rückstellmittel (27) in Ruhe derart ist, dass der Rück-Stempel (25) aus der Matrize (26) in der Nivellierrichtung (Dₙ) um eine Höhe, welche gleich der Nivelliereindringung (eₙ) ist, vorsteht.

7. Verfahren (30) zur Herstellung einer schlanken Plastikkarte (1) von großem Format und von großer Dicke (6), welche eine von der Karte (1) ablösbare Karte (2) von kleinem Format und von geringer Dicke (5) umfasst, umfassend die folgenden Schritte:
- Ausbilden (31) einer Senkung (8) mit einer Tiefe (7), die gleich der Differenz zwischen der großen Dicke (6) und der geringen Dicke (5) ist, in einer ersten Seite (3) der Karte (1),
- Nivellierstempeln (32), in dem gesenkten Bereich, in einer Nivellierrichtung (Dₙ) gegenüber einer der ersten Seite (3) gegenüberliegenden zweiten Seite (4) der Karte (1), entsprechend einer Nivelliereindringung (eₙ), welche gleich der Tiefe (7) der Senkung (8) ist, um den Boden (9) der Senkung (4) mit der ersten Seite (3) der Karte (1) zu nivellieren,
- Vorschneiden (33) einer in den nivellierten Bereich einbeschriebenen Kontur (10) der Karte (2), um die Karte (2) ablösbar zu machen.

8. Verfahren nach Anspruch 7, bei dem der Schritt des Vorschneidens (33) die folgenden Schritte umfasst:
- Hin-Stempeln (34) der Karte (1) mittels eines Hin-Stempels (24), der im Vollen eine mit der Kontur (10) der Karte (2) im Wesentlichen identische Form (29) aufweist, in einer Hin-Richtung (Dₐ), gegen eine Matrize (26), die vertieft eine mit der Kontur (10) der Karte (2) im Wesentlichen identische Form (29) aufweist, die mit dem Hin-Stempel (24) fluchtet, um das durch den Hin-Stempel (24) getriebene Material (13) aufnehmen zu können, und
- Rück-Stempeln (35) der Karte (1) in einer zu der Hin-Richtung (Dₐ) entgegengesetzten Rück-Richtung (Dᵣ), mittels eines Rück-Stempels (25), der im Vollen eine mit der Kontur (10) der Karte (2) im Wesentlichen identische Form (29) aufweist, der mit dem Hin-Stempel (24) fluchtet.

9. Verfahren nach Anspruch 8, bei dem die Nivellierrichtung (Dₙ) mit der Hin-Richtung (Dₐ) identisch ist und bei dem die Schritte des Hin-Stempelns (34) und des Nivellierstempelns (32) zu einem einzigen Stempelschritt, entsprechend einer Hin-Eindringung (eₐ) im Wesentlichen gleich einer Rück-Eindringung (er) des Rück-Stempelns (35) erhöht um die Nivelliereindringung (eₙ), verschmelzen.

10. Verfahren nach Anspruch 8, bei dem die Nivellierrichtung (Dₙ) mit der Rück-Richtung (Dᵣ) identisch ist und bei dem die Schritte des Rück-Stempelns (35) und des Nivellierstempelns (32) zu einem einzigen Stempelschritt, entsprechend einer Rück-Eindringung (eᵣ) im Wesentlichen gleich einer Hin-Eindringung (eₐ) des Hin-Stempelns (34) erhöht um die Nivelliereindringung (eₙ), verschmelzen.

11. Verfahren nach einem der Ansprüche 7 bis 10, weiterhin umfassend einen Schritt eines:
- zweiten Vorschneidens einer dem nivellierten Bereich umbeschriebenen zweiten Kontur, um einen ablösbaren Adapter zu bilden.

12. Verfahren nach Anspruch 11, bei dem der Schritt des zweiten Vorschneidens die folgenden Schritte umfasst:
- Hin-Stempeln der Karte (1) mittels eines zweiten Hin-Stempels, der im Vollen eine mit der zweiten Kontur im Wesentlichen identische Form aufweist, in einer zweiten Hin-Richtung, gegen eine zweite Matrize, die vertieft eine mit der zweiten Kontur im Wesentlichen identische Form aufweist, die mit dem zweiten Hin-Stempel fluchtet, um das durch den zweiten Hin-Stempel getriebene Material aufnehmen zu können, und
- Rück-Stempeln der Karte (1) in einer zu der zweiten Hin-Richtung entgegengesetzten zweiten Rück-Richtung, mittels eines zweiten Rück-Stempels, der im Vollen eine mit der zweiten Kontur im Wesentlichen identische Form aufweist, der mit dem zweiten Hin-Stempel fluchtet.

13. Verfahren nach Anspruch 12, bei dem die zweite Hin-Richtung mit der Hin-Richtung (Dₐ) identisch ist.

14. Verfahren nach Anspruch 12, bei dem die zweite Hin-Richtung mit der Rück-Richtung (Dᵣ) identisch ist.

15. Verfahren nach einem der Ansprüche 11 bis 14, bei dem die Karte (2) im 4FF Format ist und bei dem der Adapter im 3FF Format ist.

## Claims

1. Tooling (20) for fabricating a thin plastics plate (1) of large format and of large thickness (6) including a card (2) of small format and small thickness (5) that is detachable from the plate (1), comprising:
• spotfacing means (21) suitable for making (31) a spotface (8) in a first face (3) of the plate (1), the spotface (8) being of depth (7) equal to the difference between the large thickness (6) and the small thickness (5) ;
• a leveling punch (22) suitable for performing (32) leveling punching in the spotface zone in a leveling direction (Dₙ) facing a second face (4) of the plate (1) opposite from the first face (3), through a leveling stroke (eₙ) equal to the depth (7) of the spotface (8), in order to bring the bottom (9) of the spotface (8) level with the first face (3) of the plate (1); and
• pre-cutting means suitable for pre-cutting an outline (10) of the card (2) within the leveled zone, in order to make the card (2) detachable.

2. Tooling (20) according to claim 1, wherein the pre-cutting means comprise:
• a go punch (24) presenting a solid shape (29) substantially identical to the outline (10) of the card (2), and suitable for punching the plate (1) along a go direction (Dₐ) ;
• a die (26) presenting a hollow shape (29) substantially identical to the outline (10) of the card (2), and in alignment with the go punch (24) in order to be capable of receiving the material (13) pushed by the go punch (24); and
• a return punch (25) presenting a solid shape (29) substantially identical to the outline (10) of the card (2), in alignment with the go punch (24) and suitable for punching the plate (1) in a return direction (Dᵣ) opposite to the go direction (Dₐ).

3. Tooling (20) according to claim 2, wherein the leveling direction (Dₙ) is identical to the go direction (Dₐ), wherein the go punch (24) and the leveling punch (22) are the same punch, and wherein a go stroke (eₐ) of the go punch (24) is substantially equal to a return stroke (eᵣ) of the return punch (25) plus the leveling stroke (eₙ).

4. Tooling (20) according to claim 2, wherein the leveling direction (Dₙ) is identical to the return direction (Dᵣ), wherein the return punch (25) and the leveling punch (22) are the same punch, and wherein a return stroke (eᵣ) of the return punch (25) is substantially equal to a go stroke (eₐ) of the go punch (24) plus the leveling stroke (eₙ).

5. Tooling (20) according to any one of claims 1 to 4, wherein the return punch (25) includes return means (27) that are loaded when the return punch (25) is subjected to thrust along the go direction (Dₐ), and urging the return punch (25) along the return direction (Dᵣ) when the thrust ceases.

6. Tooling (20) according to claim 5, wherein the return means (27) at rest are such that the return punch (25) projects from the die (26) in the leveling direction (Dₙ) by a height equal to the leveling stroke (eₙ).

7. A method (30) of fabricating a thin plastics plate (1) of large format and of large thickness (6) and including a card (2) of small format and of small thickness (5) that is detachable from the plate (1), comprising the following steps:
• making (31) a spotface (8) in a first face (3) of the plate (1) to a depth (7) equal to the difference between the large thickness (6) and the small thickness (5);
• leveling punching (32) in the spotface zone along a leveling direction (Dₙ) facing a second face (4) of the plate (1) opposite from the first face (3), through a leveling stroke (eₙ) equal to the depth (7) of the spotface (8), in order to bring the bottom (9) of the spotface (4) level with the first face (3) of the plate (1); and
• pre-cutting (33) an outline (10) of the card (2) within the leveled zone, in order to make the card (2) detachable.

8. A method according to claim 7, wherein the pre-cutting step (33) comprises the following steps:
• go punching (34) the plate (1) by means of a go punch (24) presenting a solid shape (29) substantially identical to the outline (10) of the card (2), the punching taking place along a go direction (Dₐ) against a die (26) presenting a hollow shape (29) substantially identical to the outline (10) of the card (2) and in alignment with the go punch (24), in order to receive the material (13) pushed by the go punch (24); and
• return punching (35) the plate (1) by means of a return punch (25) presenting a solid shape (29) substantially identical to the outline (10) of the card (2) and in alignment with the go punch (24), the return punching taking place along a return direction (Dᵣ) opposite to the go direction (Dₐ).

9. A method according to claim 8, wherein the leveling direction (Dₙ) is identical to the go direction (Dₐ) and wherein the go punching step (34) and the leveling punching step (32) are a single punching step with a go stroke (eₐ) substantially equal to a return stroke (eᵣ) of the return punching step (35) plus the leveling stroke (eₙ).

10. A method according to claim 8, wherein the leveling direction (Dₙ) is identical to the return direction (Dᵣ), and wherein the return punching step (35) and the leveling punching step (32) are a single punching step through a return stroke (eᵣ) substantially equal to a go stroke (eₐ) of the go punching step (34) plus the leveling stroke (eₙ).

11. A method according to any one of claims 7 to 10, further comprising:
• a second pre-cutting step of pre-cutting a second outline circumscribed by the leveled zone in order to form a detachable adapter.

12. A method according to claim 11, wherein the second pre-cutting step comprises the following steps:
• go punching the plate (1) by means of a second go punch presenting a solid shape substantially identical to the second outline and performed along a second go direction against a second die presenting a hollow shape substantially identical to the second outline and in alignment with the second go punch in order to be capable of receiving the material pushed by the second go punch; and
• return punching the plate (1) by means of a second return punch presenting a solid shape substantially identical to the second outline and in alignment with the second go punch, punching taking place along a second return direction opposite to the second go direction.

13. A method according to claim 12, wherein the second go direction is identical to the go direction (Dₐ).

14. A method according to claim 12, wherein the second go direction is identical to the return direction (Dᵣ).

15. A method according to any one of claims 11 to 14, wherein the card (2) is of 4FF format and wherein the adapter is of 3FF format.
